(19) Europäisches Patentamt
European Patent Office
Office européen des brevets

(11) **EP 3 624 022 A1**

(12) **EUROPEAN PATENT APPLICATION**

(43) Date of publication:
**18.03.2020 Bulletin 2020/12**

(51) Int Cl.:
**G06N 3/08** *(2006.01)*       **G06N 3/04** *(2006.01)*
**G06T 7/00** *(2017.01)*

(21) Application number: **18290098.5**

(22) Date of filing: **11.09.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AG Eindhoven (NL)**

(72) Inventors:
• **ARDON, Roberto José**
  **FR - 92150 Suresnes Cedex (FR)**
• **BERTRAND, Hadrien**
  **FR - 92150 Suresnes Cedex (FR)**

(74) Representative: **de Haan, Poul Erik**
**Philips International B.V.**
**Philips Intellectual Property & Standards**
**High Tech Campus 5**
**5656 AE Eindhoven (NL)**

(54) **MODIFYING A NEURAL NETWORK**

(57)    The invention discloses an apparatus for modifying a neural network. The apparatus (100) comprises a processor (102) configured to: modify an architecture of a neural network trained for performing a task, by adding at least one unit to the architecture of the neural network, wherein the at least one unit comprises a predictive model configured to determine transformation parameters to be applied to input data; and train the predictive model of the at least one unit to determine the transformation parameters. Methods and a computer program product are also disclosed.

Fig. 1

200

Fig. 2

300

U1'                    302                    U6'

308                    U2'          304          U5'    318

L3'  L4'          310  U3'  306  U4'

L5'  L6'  312  314  L9'  L10'  316  L11'  L12'

L7'  L8'

L13'  L14'  L15'

Fig. 3

400

404                    406

I → [ 408 → 410 ] → 402 → [ 406 ] → O

Fig. 4

**Description**

FIELD OF THE INVENTION

The invention relates to an apparatus and a method for modifying a neural network, and in particular to adding a component to a neural network for training the component.

BACKGROUND OF THE INVENTION

Predictive models are used in many sectors for predicting an output given an input and one or more constraints or requirements. An example of a predictive model suitable for making such a prediction is an artificial neural network. An artificial neural network (also referred to as a neural network) can be trained to look for particular patterns or occurrences in similar data elements, so that, when a trained neural network model is provided with a new data element, the model is able to identify the pattern or occurrence reliably.

Once a predictive model (e.g. a neural network) has been trained for performing a particular task (e.g. identifying a particular object in an image), the trained model is generally not able to accurately perform a new task, unless the model is retrained and/or parameters of the model are modified. Modifying parameters (e.g. weights) of a neural network and retraining the modified neural network to perform a new task using a new set of training data is time-consuming, and the original (i.e. unmodified) neural network is not suitable for use in performing the new task.

One method for transferring model knowledge (e.g. weights of a trained neural network) so that a trained neural network can be used to perform a new task is known as 'fine tuning'. In a fine tuning technique, a neural network trained on a source dataset is retrained on a new target dataset with a reduced learning rate. No modifications are made to the architecture of the neural network, so the fine tuning technique requires less implementation effort. However, performance of neural network on the source dataset cannot be guaranteed after retraining, so multiple networks (the original network and the fine-tuned network) are required to perform both tasks.

SUMMARY OF THE INVENTION

It would be beneficial to be able to reuse a trained network, while extending the network for use with an additional task or for use with data for which the trained network was not originally intended to be used. Embodiments of the invention arise from the recognition that, by modifying a neural network which has been trained to perform a particular task, that neural network can be extended for use with additional input data and for use in performing an additional task.

According to a first aspect, embodiments provide an apparatus for modifying a neural network, the apparatus comprising a processor configured to modify an architecture of a neural network trained for performing a task, by adding at least one unit to the architecture of the neural network, wherein the at least one unit comprises a predictive model configured to determine transformation parameters to be applied to input data; and train the predictive model of the at least one unit.

By adding a unit to the architecture of a trained neural network, the possible uses of the neural network can be increased. Thus, a single modified neural network can be used to perform multiple tasks, making use of the training performed previously (in respect of the unmodified neural network). Furthermore, the additional unit or units added to the neural network can be trained using a relatively smaller amount of training data, meaning that the training phase can be completed quickly, requiring less processing resources.

In some embodiments, the at least one unit may comprise a geometric transformation unit configured to perform a global geometric transformation of its input. The geometric transformation unit may be configured to perform at least one of a translation, a rotation and a scaling of its input. In other embodiments, the at least one unit may comprise a feature adaptation unit configured to perform a local transformation of its input. The feature adaptation unit may be configured to perform a kernel-based convolution of its input.

In some embodiments, the task may comprise a medical image segmentation task.

The processor may, in some embodiments, be configured to apply a transformation based on the determined transformation parameters to the input data.

A data set used for training the predictive model may be significantly smaller than a data set used to train the neural network for performing the task.

In some embodiments, the neural network comprises a sequential neural network or a U-net neural network.

According to a second aspect, embodiments provide a method for modifying a neural network, the method comprising: modifying an architecture of a neural network trained for performing a task, wherein said modifying comprises adding at least one unit to the architecture of the neural network, wherein the at least one unit comprises a predictive model configured to determine transformation parameters to be applied to input data; and training the predictive model of the at least one unit to determine the transformation parameters.

According to a third aspect, embodiments provide a method for using a neural network, the method comprising: providing a neural network trained for performing a task, the neural network comprising at least one unit that comprises a predictive model configured to determine transformation parameters; providing input data to the neural network on which the task it to be performed; determining, using the predictive model of the at least one unit, transformation parameters to be applied to the input data; applying a transformation based on the determined transformation parameters to the input data; and performing, using the neural network, the task on the input data.

In some embodiments, determining the transformation parameters may comprise determining at least one of: transformation parameters for performing a global geometric transformation of the input data; and transformation parameters for performing a local transformation of its input.

In some embodiments, responsive to determining that no transformation of the input data is to be performed, said determining may comprise determining that the transformation parameters are to comprise an identity matrix.

The input data may, in some embodiments, comprise medical image data.

According to a fourth aspect, embodiments provide a computer program product comprising a non-transitory computer-readable medium, the computer-readable medium having computer-readable code embodied therein, the computer-readable code being configured such that, on execution by a suitable computer or processor, the computer or processor is caused to perform steps of the methods disclosed herein.

These and other aspects of the invention will be apparent from and elucidated with reference to the embodiments described hereinafter.

BRIEF DESCRIPTION OF THE DRAWINGS

For a better understanding of the invention, and to show more clearly how it may be carried into effect, reference will now be made, by way of example only, to the accompanying drawings, in which:

Fig. 1 is a simplified schematic of an example of an apparatus for modifying the neural network, according to various embodiments;
Fig. 2 is a simplified schematic of an example of a neural network according to various embodiments;
Fig. 3 is a simplified schematic of a further example of a neural network according to various embodiments;
Fig. 4 is a simplified schematic of an example of a modified neural network, according to various embodiments;
Fig. 5 is a schematic illustration of an example of a unit for a neural network for performing a transformation, according to various embodiments;
Fig. 6 is a schematic illustration of a further example of a unit for a neural network for performing a transformation, according to various embodiments;
Fig. 7 is a flowchart of an example of a method for modifying a neural network, according to various embodiments;
Fig. 8 is a flowchart of a further example of a method for modifying a neural network, according to various embodiments; and
Fig. 9 is a simplified schematic of a processor and a computer-readable medium.

DETAILED DESCRIPTION OF EMBODIMENTS

Embodiments disclosed herein enable a neural network which has been trained to perform a task to be modified on a first type or set of data so that it can be used to perform the task on a second, different type or set of data. The modified neural network may, for example, be trained using a training set that is different to the one used to train the original neural network, and the modified neural network may be used to perform the task on a different type of input to the input provided to the unmodified neural network.

Some examples disclosed herein are described in a medical context. For example, according to some embodiments, a neural network may be used to classify medical images and/or to identify objects in medical images. However, it will be apparent to the skilled person that embodiments may be applied to other fields and sectors unrelated to medicine or clinical practice. Furthermore, while embodiments are described in which images are used as the inputs, in other embodiments, inputs may be provided to the neural networks that are not images. Data of any form may be provided as an input to the neural network. For example, text (e.g. a report) may be provided as an input.

Artificial neural networks or, simply, neural networks, will be familiar to those skilled in the art, but in brief, a neural network is a type of model that can be used to classify data (for example, classify, or identify the contents of image data). The structure of a neural network is inspired by the human brain. Neural networks are comprised of layers, each layer comprising a plurality of neurons. Each neuron comprises a mathematical operation. In the process of classifying a portion of data, the mathematical operation of each neuron is performed on the portion of data to produce a numerical output, and the outputs of each layer in the neural network are fed into the next layer sequentially. Generally, the mathematical operations associated with each neuron comprise one or more weights that are tuned during the training process (e.g. the values of the weights are updated during the training process to tune the model to produce more accurate classifications).

For example, in a neural network model for classifying the contents of images, each neuron in the neural network may comprise a mathematical operation comprising a weighted linear sum of the pixel (or in three dimensions, voxel) values in the image followed by a non-linear transformation. Examples of non-linear transformations used in neural networks include sigmoid functions, the hyperbolic tangent function and the rectified linear function. The neurons in each layer of the neural network generally comprise a different weighted combination of a single type of transformation (e.g. the same type of transformation, sigmoid etc. but with different weightings). As will be familiar to the skilled person, in some layers, the same weights may be applied by each neuron in the linear sum; this applies, for example, in the case of a convolution layer. The weights associated with each neuron may make certain features more prominent (or conversely less prominent) in the classification process than other features and thus adjusting the weights of neurons in the training process trains the neural network to place increased significance on specific features when classifying an image. Generally, neural networks may have weights associated with neurons and/or weights between neurons (e.g. that modify data values passing between neurons).

As briefly noted above, in some neural networks, such as convolutional neural networks, lower layers such as input or hidden layers in the neural network (i.e. layers towards the beginning of the series of layers in the neural network) are activated by (i.e. their output depends on) small features or patterns in the portion of data being classified, while higher layers (i.e. layers towards the end of the series of layers in the neural network) are activated by increasingly larger features in the portion of data being classified. As an example, where the data comprises an image, lower layers in the neural network are activated by small features (e.g. such as edge patterns in the image), mid-level layers are activated by features in the image, such as, for example, larger shapes and forms, whilst the layers closest to the output (e.g. the upper layers) are activated by entire objects in the image.

In general, the weights of the final layers of a neural network model (known as the output layers) are most strongly dependent on the particular classification problem being solved by the neural network. For example, the weights of outer layers may heavily depend on whether the classification problem is a localization problem or a detection problem. The weights of lower layers (e.g. input and/or hidden layers) tend to depend on the contents (e.g. features) of the data being classified.

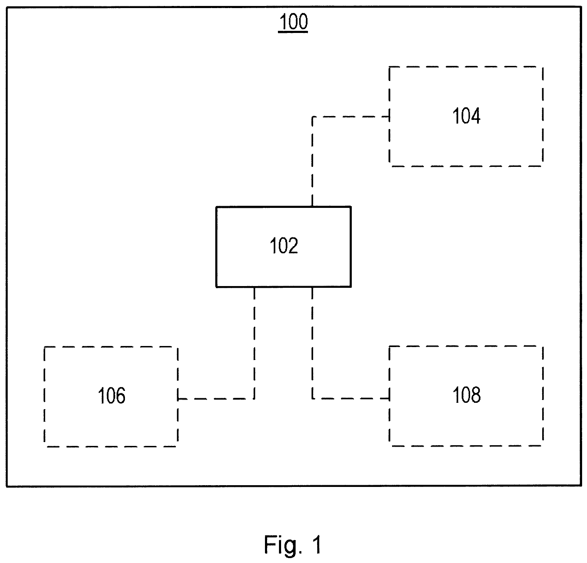

According to a first aspect, embodiments disclosed herein relate to an apparatus for modifying a neural network. Referring to the drawings, Fig. 1 shows a block diagram of an apparatus 100 that can be used for determining features to be included in a risk assessment instrument. With reference to Fig. 1, the apparatus 100 comprises a processor 102 that controls the operation of the apparatus 100 and that can implement the methods described herein. The apparatus 100 may further comprise a memory 106 comprising instruction data representing a set of instructions. The memory 106 may be configured to store the instruction data in the form of program code that can be executed by the processor 102 to perform the methods described herein. In some implementations, the instruction data can comprise a plurality of software and/or hardware modules that are each configured to perform, or are for performing, individual or multiple steps of the method described herein. In some embodiments, the memory 106 may be part of a device that also comprises one or more other components of the apparatus 100 (for example, the processor 102 and/or one or more other components of the apparatus 100). In alternative embodiments, the memory 106 may be part of a separate device to the other components of the apparatus 100. For example, the apparatus 100 may be implemented as part of a cloud computing environment.

The processor 102 of the apparatus 100 can be configured to communicate with the memory 106 to execute the set of instructions. The set of instructions, when executed by the processor may cause the processor to perform steps of the methods described herein. The processor 102 can comprise one or more processors, processing units, multi-core processors or modules that are configured or programmed to control the apparatus 100 in the manner described herein. In some implementations, for example, the processor 102 may comprise a plurality of processors, processing units, multi-core processors and/or modules configured for distributed processing. It will be appreciated by a person skilled in the art that such processors, processing units, multi-core processors and/or modules may be located in different locations and may each perform different steps and/or different parts of a single step of the methods described herein.

In some embodiments, as illustrated in Fig. 1, the apparatus 100 may comprise at least one user interface 104 configured to receive any of the user inputs described herein. The user interface 104 may allow a user of the apparatus 100 to manually enter instructions, data, or information relating to the method described herein. For example, a user interface 104 may be used by a user (e.g. a clinician) to provide training data for training a neural network, and/or to input data in respect of which a task is to be performed by a trained neural network. In some embodiments, the user interface 104 may be used to present an output of a neural network (e.g. a classification result) to a user. The user interface 104 may be any type of user interface that enables a user of the apparatus 100 to provide a user input, interact with and/or control the apparatus 100. For example, the user interface 104 may comprise one or more switches, one or more buttons, a keypad, a keyboard, a mouse, a touch screen, a microphone or an application (for example, on a tablet or smartphone), or any other user interface, or combination of user interfaces that enables the user to provide data to the apparatus and/or via which the user can consume information from the apparatus 100.

In some embodiments, the user interface 104 (or another user interface of the apparatus 100) may enable rendering (or output or display) of information, data or signals to a user of the apparatus 100. As such, a user interface 104 may be for use in providing a user of the apparatus 100 with information relating to or resulting from the method according to embodiments herein. The processor 102 may be configured to control one or more user interfaces 104 to provide information resulting from the method according to embodiments described herein. For example, the processor 102 may be configured to control one or more user interfaces 104 to render (or output or display) data (e.g. an output of a trained neural network model) using the methods described herein and/or any other outputs of the methods described herein. The user interface 104 may, in some embodiments, comprise a display screen, a graphical user interface (GUI) or other visual rendering component, one or more speakers, one or more microphones or any other audio component, one or more lights, a component for providing tactile feedback (e.g. a vibration function), or any other user interface, or combination of user interfaces for providing information relating to, or resulting from the method, to the user. In some embodiments, the user interface 104 may be part of a device that also comprises one or more other components of the apparatus 100 (for example, the processor 102, the memory 106 and/or one or more other components of the apparatus 100). In alternative embodiments, the user interface 104 may be part of a separate device to the other components of the apparatus 100.

In some embodiments, as illustrated in Fig. 1, the apparatus 100 may also comprise a communications interface (or circuitry) 108 for enabling the apparatus 100 to communicate with any interfaces, memories and devices that are internal or external to the apparatus 100. The communications interface 108 may communicate with any interfaces, memories and devices wirelessly or via a wired connection.

It will be appreciated that Fig. 1 shows the components required to illustrate this aspect of the disclosure and, in a practical implementation, the apparatus 100 may comprise other components in addition to those shown. For example, the apparatus 100 may comprise a battery or other power supply for powering the apparatus 100 or means for connecting the apparatus 100 to a mains power supply.

As noted above, the processor 102 is configured to perform steps of the methods described herein. In some embodiments, a memory (e.g. the memory 106) may be configured to store a set of instructions which, when executed by the processor 102 of the apparatus 100, cause the processor 102 to perform steps or functions as discussed below. The processor 102 is configured to modify an architecture of a neural network trained for performing a task, by adding at least one unit to the architecture of the neural network, wherein the at least one unit comprises a predictive model configured to determine transformation parameters to be applied to input data. The architecture of a neural network may be considered to include the structure of the neural network. For example, modifying the architecture of a neural network may include adding additional neurons, layers or units to the network without modifying the parameters (e.g. the weights) of other neurons or weights in the neural network.

The predictive model may, in some embodiments, comprise a separate (e.g. secondary) neural network which may, for example, be significantly smaller than the neural network to which it is added. In some embodiments, the predictive model may be considered to be a secondary neural network to the "primary" neural network in which it is added. For example, the predictive model may be considered to be a sub-unit or a sub-component of the unit added into the original neural network (i.e. the neural network trained for performing the task). The predictive model may be referred to as a determination component or a parameter determination component, as it determines the transformation parameters. In some examples, the predictive model may be referred to as a transfer neural network. The predictive model (e.g. a second neural network) may be trained (e.g. using a separate set of training data) so that the original neural network is able to perform the task in respect of a new type or class of input data provided to the neural network. In embodiments disclosed herein, the predictive model is configured to determine transformation parameters to be applied to input data provided to the neural network. In other words, the predictive model is configured to perform at least one modification of at least part of the input data to put the input data into a form suitable to be processed using the neural network. The term "original" neural network is used herein to refer to the neural network before it is modified by the addition of a unit.

The processor 102 is further configured to train the predictive model of the at least one unit to determine the transformation parameters. The predictive model may be trained using a different set of training data which may, in some examples, be smaller (e.g. considerably smaller) than the set of training data used to train the neural network (i.e. the original neural network trained for performing the task). Thus, in some embodiments, a data set used for training the predictive model may be significantly smaller than a data set used to train the neural network for performing the task (i.e. the original neural network). By using a relatively smaller data set to train the predictive model, less time and computer resources may be required.

In some embodiments (e.g. where the predictive model is added at the beginning of the neural network), the output of the predictive model may be provided as an input to the original neural network. In other embodiments, the predictive model may be incorporated into the original neural network. Thus, by training the predictive model using a second type of data, the now modified neural network may be capable of performing the task in respect of input data of the second type. In some embodiments, the task may comprise a medical image segmentation task. As will become apparent from the example below, the task may, in some embodiments, comprise an image segmentation task to be performed in respect of a first type of data (e.g. medical images acquired from adults). The modified neural network (i. e. following training of the predictive model) may be used to additionally perform the task in respect of a second type of data (e.g. medical images acquired from children), which the original, unmodified neural network is not suitable for processing. For example, an image segmentation task of the original, unmodified neural network may involve segmenting a first type of image (e.g. a medical image of an adult's kidney) and the image segmentation task of the modified neural network (i.e. following training of the predictive model) may involve segmenting a second type of image (e.g. a medical image of a child's kidney).

According to one example, a neural network may be trained for performing a task of segmenting a medical image. Specifically, the neural network may be trained for segmenting (e.g. demarcating or identifying boundaries of) an object (e.g. a kidney) in a medical image captured in respect of an adult subject or patient. For example, a medical image of part of an adult subject which includes the subject's kidney may be provided as an input to the trained neural network, and the neural network may provide as an output a version of the input image containing a boundary of the subject's kidney. In some examples, the neural network may be trained to additionally perform a measurement of the identified kidney, or to perform some determination (e.g. a diagnosis) in respect of the identified kidney.

While such neural network may work well and provide accurate outputs in respect of images of adult kidneys (e.g. because the neural network was trained using training data focused on adult kidneys), the neural network may not perform well in respect of images of kidneys captured from child or infant subjects. In medical images of kidneys captured from children the kidneys may be smaller and oriented differently with respect to other objects in the image. Generally, there is a large amount of variability in the size, shape and orientation of kidneys in children compared to kidneys in adults. Furthermore, many of the subjects in respect of whom medical images are captured have medical conditions (e. g. hydronephrosis) which results in the kidney appearing differently (e.g. deformed) relative to a healthy kidney. Thus, the trained neural network is not able to perform segmentation of such images accurately and consistently because it is trained to segment images of adult kidneys.

Continuing this example, the neural network trained for segmenting images of adult kidneys may be modified by adding at least one unit to the architecture of the neural network. The unit or units include a predictive model configured to determine transformation parameters to be applied to input data so that the original neural network (i.e. the network trained for segmenting images captured from adult subjects) can also be used to perform the task (i.e. segmenting images) in respect of images captured from child subjects. Once the neural network has been modified, the predictive model(s) may be trained using a set of training data including medical images captured from child subjects, so that the modified neural network is able to accurately and consistently segment images captured from both adults and children. In this way, a single modified neural network may be used for performing tasks in respect of multiple types of data. Furthermore, the training performed in respect of the first type of data (e.g. images of adult kidneys) is not lost, and can be used in respect of a second, different type of data (e.g. images of child kidneys).

In some embodiments, the processor 102 may be further configured to apply a transformation based on the determined transformation parameters to the input data. Thus, the transformation parameters determined by the predictive model may be applied to input data so that the input data (even data of type or class different to that used to train the original neural network) may be processed by the neural network.

Those skilled in the art will understand various types of neural networks may be used in the embodiments disclosed herein. In some embodiments, the neural network may comprise a sequential neural network or a U-net neural network. In other embodiments, other types of neural network may be used. For example, the neural network may comprise a feed forward model (such as a convolutional neural network, an autoencoder neural network model, a probabilistic neural network model and a time delay neural network model), a radial basis function network model, a recurrent neural network model (such as a fully recurrent model, a Hopfield model, or a Boltzmann machine model), or any other type of neural network model comprising weights. In general, regardless of the type of neural network used, a unit may be added to modify the original neural network to enable it to perform the task in respect of a different type of input data.

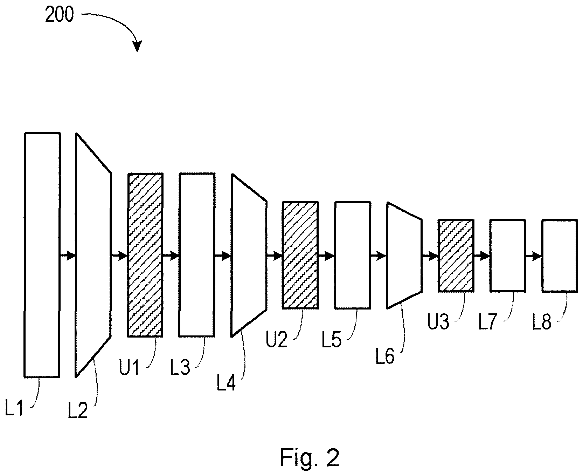

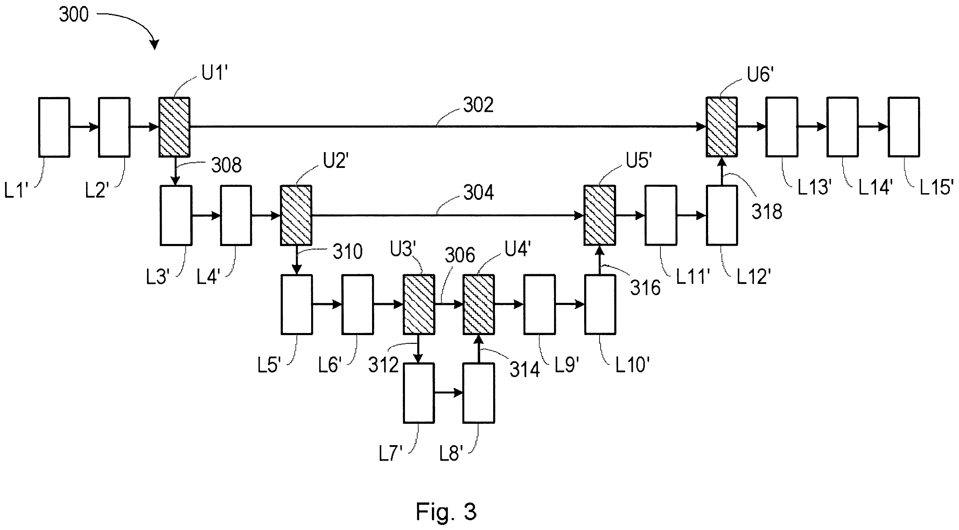

Figs. 2 and 3 show examples of two different types of neural networks that might be used in various embodiments disclosed herein.

Fig. 2 is a simplified schematic of an example of a neural network 200. The neural network 200 is a sequential neural network which includes a plurality of layers L1 to L8. The layer L1 represents an input layer and the layer L8 represents an output layer. The layers L2 to L7 represent hidden layers of the network which may include one or more convolutional layers, pooling layers, fully connected layers and/or normalization layers. The units U1, U2 and U3 represent units added to the architecture of the neural network 200 during the modification of the neural network. While three added units U1, U2 and U3 are shown in Fig. 2, it will be appreciated that fewer or more units may be added into the neural network 200 during modification. It will also be appreciated that one or more units (e.g. one or more of the units U1, U2, U3) may be added at positions in the neural network 200 that are different to those shown in Fig. 2.

Fig. 3 is a simplified schematic of a further example of a neural network 300. The neural network 300 is a convolutional neural network in the form of a 'U-Net', which will be familiar to those skilled in the art. The neural network 300 includes a plurality of layers L1' to L15'. In this example, the layer L1' represents the input layer and the layer L15' represents the output layer. The layers L2' to L14' represent hidden layers of the network. The units U1' to U6' represent units added to the architecture of the U-Net neural network 300 during the modification of the neural network. Again, it will be appreciated that fewer or more units may be added into the neural network 300 during modification, and that one or more units (e.g. one or more of the units U1' to U6') may be added at positions in the neural network 300 that are different to those shown in Fig. 3. In Fig. 3, the arrows 302, 304 and 306 represent connections forming a contracting path. Each of the arrows 308, 310 and 312 represents a max-pooling (i.e. down-sampling) operation, and each of the arrows 314, 316, 318 represents an up-sampling, or up-convolution operation. It will be appreciated, however, that, in other examples, an alternative down-sampling operation may be used, such as mean-pooling.

The at least one unit (U1 to U3, U1' to U6', referred to hereinafter generally as U) may, in some embodiments, comprise a geometric transformation unit configured to perform a global geometric transformation of its input. Such a geometric transformation unit may be used to perform a geometric transformation on the entire input data element (e. g. an entire image) in order to make the input data suitable for being processed using the neural network. In some examples, the geometric transformation unit may be configured to perform at least one of a translation, a rotation and a scaling of its input. For example, a translation of the input data may cause the input data to move between two relative positions; a rotation of the input data may cause the input data to rotate relative to its original orientation; and a scaling of the input data may cause the input data to increase or decrease in size by a defined scaling factor. In an example where the input data comprises an image (e.g. a medical image), a translation of the image may cause at least a portion of the image to move from its original position, a rotation of the image may cause at least a portion of the image to rotate from its original orientation, and a scaling of the image may cause the size of at least a portion of the image to be increased or decreased.

Referring to the adult/child image example discussed above, it will be apparent that, by performing a geometric transformation on a medical image captured from a child subject, it is possible to modify the appearance of the image, or at least a portion of the image (e.g. a kidney) so that it is similar in appearance to a medical image captured from an adult subject. In this way, the neural network that was trained to segment a medical image of an adult is able to process the transformed (i.e. by the geometric transformation unit) medical image of a child.

In some embodiments, a geometric transformation unit may be added at or before the beginning of the trained neural network (e.g. before layers L1 and L1' in Figs. 2 and 3 respectively). In this way, the geometric transformation unit acts directly on the input data before the input data has been processed by any of the layers of the trained neural network. In some embodiments, a second geometric transformation unit may be added to the trained neural network. The second geometric transformation unit may, for example, comprise an inverse of the geometric transformation unit positioned at or before the beginning of the trained neural network to perform an inverse transformation. The second geometric transformation unit may, in some examples, the positioned at or after the end of the trained neural network (e.g. after layers L8 and L15' in Figs. 2 and 3 respectively) so that the inverse transformation is performed on the output of the neural network. In other examples, the geometric transformation units may be added at different locations in the trained neural network, for example after a particular layer in the neural network.

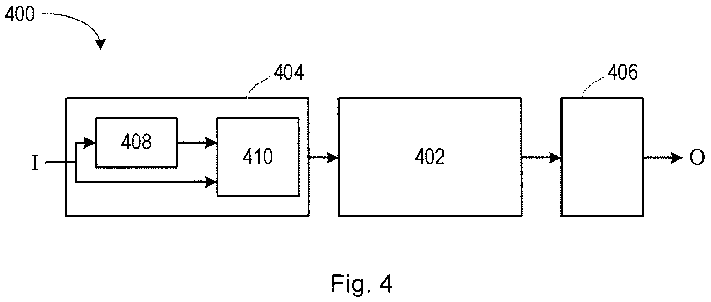

Thus, input data provided to the neural network undergoes a unique transformation; the parameters of the transformation are determined by the unit added to the trained neural network, and are applied by the added unit to the input data. In some embodiments, the predictive model of the added unit determines the transformation parameters and the transformation parameters are applied to the input data by another component of the added unit. Fig. 4 is a simplified schematic of an example of a modified neural network 400 according to various embodiments. In this example, the original trained neural network 402 is modified by the addition of a first geometric transformation unit 404 and a second geometric transformation unit 406. The first geometric transformation unit 404 comprises a predictive model 408 configured to determine the transformation parameters to the applied to the input, I, and a transformation operator 410 configured to perform the geometric transformation to the input, I, based on the determined transformation parameters. The transformed image is then processed by the trained neural network 402, the output of the neural network is provided to the second geometric transformation unit 406, which is configured to perform an inverse geometric transformation (i. e. inverse to the geometric transformation performed by the transformation operator 410). The output, O, of the second geometric transformation unit 406 comprises the segmented image (also referred to as a segmentation map). According to the adult/child image example given above, the output, O, comprises the segmented child image.

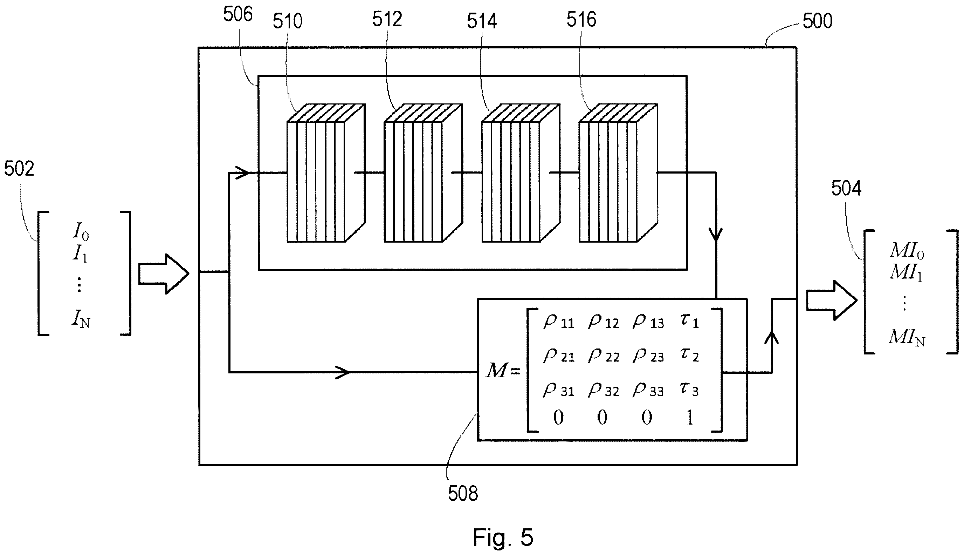

Fig. 5 is a schematic illustration of an example of a geometric transformation unit 500. An input 502 is provided to the geometric transformation unit 500 as a vector, and a transformed vector is provided as an output 504. Within the geometric transformation unit 500, a predictive model 506 assesses the input 502 and determines the transformation parameters to be applied to the input. A transformation operator 508 applies the determined transformation parameters to the input 502 to generate the output 504. In the example shown, blocks 510, 512, 514 and 516 of the predictive model 506 represent layers neural network. The predictive model 506 may be trained as discussed below. The input 502 is

defined by components, $I_0$, $I_l$ to $I_N$, and the output 504 is defined by components $MI_0$, $MI_l$ to $MI_N$. The components p and $\tau$ in the matrix of the transformation operator 508 represent the transformation parameters defined by the predictive model 506.

According to some embodiments, the at least one unit, U, may comprise a feature adaptation unit configured to perform a local transformation of its input. In some embodiments, the feature adaptation unit may be configured to perform a kernel-based convolution of its input. For example, a local feature transformation may be performed using a small convolution kernel, such as a 1x1x1 kernel. The intention of the feature adaptation unit is to modify particular features of the input data (e.g. particular regions of the data) to make the input data more suitable for processing by the trained neural network. For example, as noted above, many medical images of kidneys of children include signs of a disease or medical condition which changes how objects (e.g. a kidney) in the medical image appears. Therefore, in a medical image of a child's kidney which is suffering from hydronephrosis, features of the image may need to be modified using the feature adaptation unit so that the trained neural network is able to recognize the kidney in the image and perform the segmentation task. In general, the worse the illness evident in the image, the greater the amount of feature modification that is to be performed by the feature adaptation unit. Similarly, if a medical image of a child's kidney shows no sign of illness, then little or no modification of local features may need to be performed by the feature adaptation unit.

As with the geometric transformation unit, the feature adaptation unit may comprise a predictive model configured to determine transformation parameters to be applied to its input. The feature adaptation unit may further comprise a feature adaptation operator for performing the adaptation or modification of one or more features based on the determined transformation parameters. In some embodiments, in the unit (e.g. the feature adaptation unit and/or the geometric transformation unit), the determination of the transformation parameters and the application of the transformation parameters to the input data may be performed by a single component.

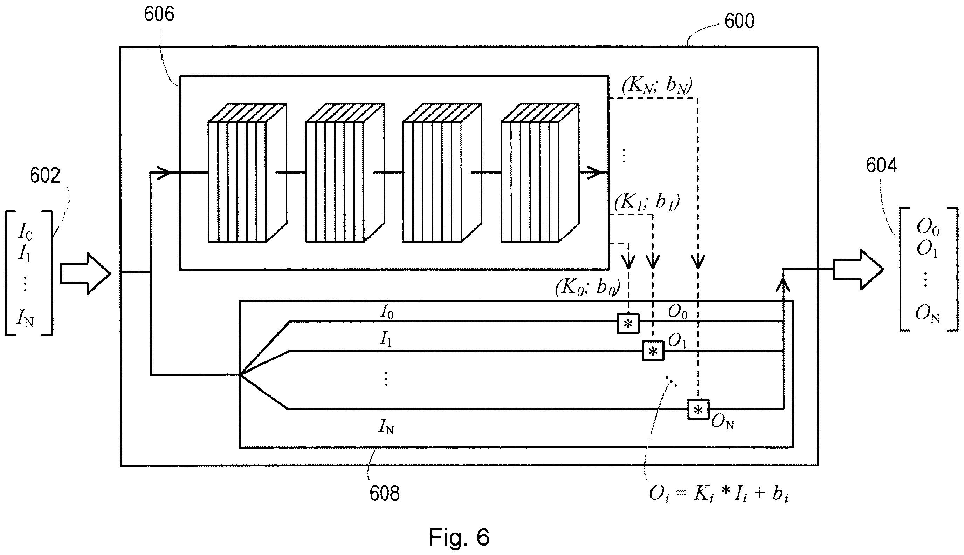

Fig. 6 is a schematic illustration of an example of a feature adaptation unit 600. An input 602 is provided to the feature adaptation unit 600 as a vector, and a transformed vector is provided as an output 604. Within the feature adaptation unit 600, a predictive model 606 assesses the input 602 and determines the transformation parameters to be applied to portions of the input. A transformation operator 608 applies the determined transformation parameters to the relevant portions of the input 602 to generate the output 604. Since the feature adaptation unit 600 applies local transformations to various portions of the input 602 (rather than a global transformation to the entire input), components of the input vector may be operated on independently of other components of the input vector. In other words, some features of the input 602 may be modified differently to other features of the input. According to some embodiments, the transformation applied to each feature is given by:

$$O_i = K_i(I;\theta) * I_i + b_i(I;\theta) \qquad [1]$$

In equation [1], $K_i(1;\theta)$ and $b_i(1;\theta)$ represent the determined transformation parameters; K represents the kernel to be applied and b represents the bias to be applied.

The predictive model (of the geometric transformation unit and/or of the feature adaptation unit) may be trained during a training phase using training data. For example, the predictive model of the geometric transformation unit may be trained with a set of training data comprising images of kidneys of children, in which the kidneys have been identified and the demarcated (e.g. the boundary of the kidney have the indicated in the image manually by a medical professional). The training data may include images of kidneys of healthy children and images of kidneys of children who are suffering from kidney-related diseases or medical conditions, such as hydronephrosis. The training data may also include images of kidneys of adults, so that the predictive model is able to learn to distinguish between the appearance of an adult's kidney and a child's kidney. In this way, the predictive model is able to learn whether or not any global geometric transformation is required (e.g. if the predictive model detects that the image is of an adult's kidney, then no geometric transformation may be required) and the predictive model is able to learn, if it is determined that a geometric transformation is required, the transformation parameters required.

In some examples, if the predictive model of the geometric transformation unit determines that no geometric transformation is required (e.g. if it is determined that the input image is of an adult kidney), or if the feature adaptation unit determines that no modification of the features is required (e.g. if it is determined that the input image is of a healthy child kidney) then the identity transform may be applied by one or more of the units U.

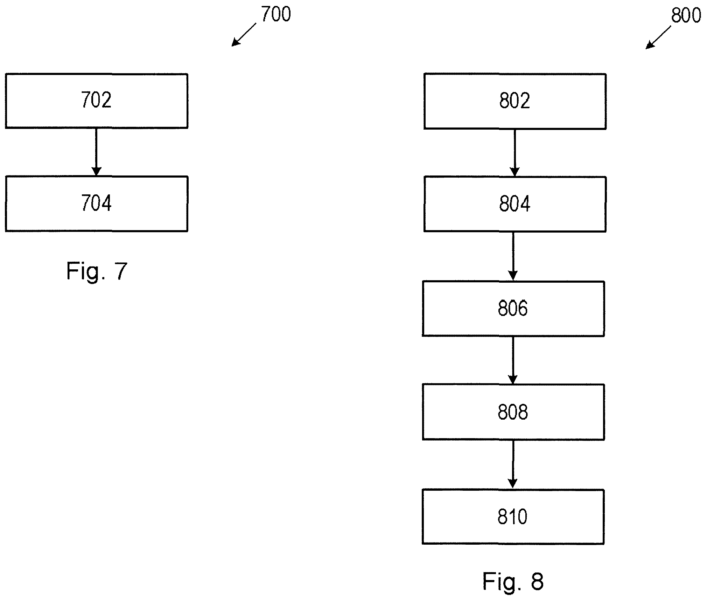

According to a second aspect, embodiments disclosed herein relate to a method for modifying a neural network. Fig. 7 is a flowchart of an example of a method 700 for modifying a neural network, according to various embodiments. The method 700 may, for example, be performed using the apparatus 100 (or components thereof) disclosed herein. The 700 comprises, at step 702, modifying an architecture of a neural network trained for performing a task, wherein said modifying comprises adding at least one unit to the architecture of the neural network, wherein the at least one unit comprises a predictive model configured to determine transformation parameters to be applied to input data. At step 704, the method 700 comprises training the predictive model of the at least one unit to determine the transformation parameters.

According to a third aspect, embodiments disclosed herein relate to a method for using a neural network. Fig. 8 is a flowchart of an example of a method 800 for using a neural network. The neural network may comprise the neural network of the method 700 discussed above. The method 800 comprises, at step 802, providing a neural network trained for performing a task, the neural network comprising at least one unit that comprises a predictive model configured to determine transformation parameters. Thus, the neural network provided at step 802 may comprise the neural network modified using the method 700. At step 804, the method 800 comprises providing input data to the neural network on which the task it to be performed. The input data may, for example, comprise a medical image of a kidney, and the task may comprise segmenting the medical image. As in the examples discussed above, the task may comprise segmenting medical images of adult kidneys and, therefore, the trained neural network (prior to modification to include the at least one unit) may not have been appropriate for segmenting medical images of children's kidneys. The method 800 comprises, at step 806, determining, using the predictive model of the at least one unit, transformation parameters to be applied to the input data. At step 808, the method 800 comprises applying a transformation based on the determined transformation parameters to the input data. As noted above, if the predictive model of the at least one unit determines that no transformation is required, then the determined transformation parameters may represent the identity transform such that the identity transform is applied to the input data, and no modification of the input data is made. Thus, responsive to determining that no transformation of the input data is to be performed, said determining (step 806) may comprise determining that the transformation parameters are to comprise an identity matrix. The method 800 comprises, at step 810, performing, using the neural network, the task on the input data. Thus, if any modification of the input data is made by any of the at least one units, then the task is performed in respect of the modified input data. The input data of method 700 or method 800 may comprise medical image data.

In some embodiments, determining (step 806) the transformation parameters may comprise determining at least one of: transformation parameters for performing a global geometric transformation of the input data; and transformation parameters for performing a local transformation of its input. The global geometric transformation may, in some embodiments, comprise at least one of a translation, a rotation and a scaling of the input data. The local transformation may, in some embodiments, comprise a modification of one or more features of the input data. Such a modification may comprise a modification as discussed above with reference to the feature adaptation unit

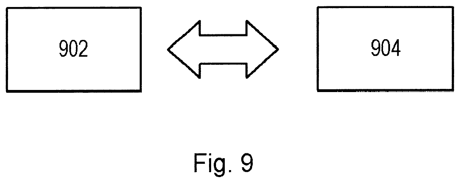

According to a fourth aspect, embodiments disclosed herein relate to a computer program product. Fig. 9 is a simplified schematic of a processor 902 and a computer-readable medium 904. According to some embodiments, a computer program product comprises a non-transitory computer-readable medium 904, the computer-readable medium having computer-readable code embodied therein, the computer-readable code being configured such that, on execution by a suitable computer or processor 902, the computer or processor is caused to perform steps of the methods 700, 800 disclosed herein.

The processor 102, 902 can comprise one or more processors, processing units, multi-core processors or modules that are configured or programmed to control the apparatus 100 in the manner described herein. In particular implementations, the processor 102, 902 can comprise a plurality of software and/or hardware modules that are each configured to perform, or are for performing, individual or multiple steps of the method described herein.

The term "module", as used herein is intended to include a hardware component, such as a processor or a component of a processor configured to perform a particular function, or a software component, such as a set of instruction data that has a particular function when executed by a processor.

It will be appreciated that the embodiments of the invention also apply to computer programs, particularly computer programs on or in a carrier, adapted to put the invention into practice. The program may be in the form of a source code, an object code, a code intermediate source and an object code such as in a partially compiled form, or in any other form suitable for use in the implementation of the method according to embodiments of the invention. It will also be appreciated that such a program may have many different architectural designs. For example, a program code implementing the functionality of the method or system according to the invention may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other. An embodiment relating to a computer program product comprises computer-executable instructions corresponding to each processing stage of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. An apparatus (100) for modifying a neural network, the apparatus comprising:
   a processor (102) configured to:

   modify an architecture of a neural network trained for performing a task, by adding at least one unit to the architecture of the neural network, wherein the at least one unit comprises a predictive model configured to determine transformation parameters to be applied to input data; and
   train the predictive model of the at least one unit to determine the transformation parameters.

2. An apparatus (100) according to claim 1, wherein the at least one unit comprises a geometric transformation unit configured to perform a global geometric transformation of its input.

3. An apparatus (100) according to claim 2, wherein the geometric transformation unit is configured to perform at least one of a translation, a rotation and a scaling of its input.

4. An apparatus (100) according to claim 1 or claim 2, wherein the at least one unit comprises a feature adaptation unit configured to perform a local transformation of its input.

5. An apparatus (100) according to claim 4, wherein the feature adaptation unit is configured to perform a kernel-based convolution of its input.

6. An apparatus (100) according to any of the preceding claims, wherein the task comprises a medical image segmentation task.

7. An apparatus (100) according to any of the preceding claims, wherein the processor (102) is further configured to:
   apply a transformation based on the determined transformation parameters to the input data.

8. An apparatus (100) according to any of the preceding claims, wherein a data set used for training the predictive model is significantly smaller than a data set used to train the neural network for performing the task.

9. An apparatus (100) according to any of the preceding claims, wherein the neural network comprises a sequential neural network or a U-net neural network.

10. A method (700) for modifying a neural network, the method comprising:

    modifying (702) an architecture of a neural network trained for performing a task, wherein said modifying comprises adding at least one unit to the architecture of the neural network, wherein the at least one unit comprises a predictive model configured to determine transformation parameters to be applied to input data; and

training (704) the predictive model of the at least one unit to determine the transformation parameters.

11. A method (800) for using a neural network, the method comprising:

   providing (802) a neural network trained for performing a task, the neural network comprising at least one unit that comprises a predictive model configured to determine transformation parameters;
   providing (804) input data to the neural network on which the task it to be performed;
   determining (806), using the predictive model of the at least one unit, transformation parameters to be applied to the input data;
   applying (808) a transformation based on the determined transformation parameters to the input data; and
   performing (810), using the neural network, the task on the input data.

12. A method according to claim 11, wherein determining (806) the transformation parameters comprises determining at least one of: transformation parameters for performing a global geometric transformation of the input data; and transformation parameters for performing a local transformation of its input.

13. A method according to claim 11 or claim 12, wherein, responsive to determining that no transformation of the input data is to be performed, said determining comprises determining that the transformation parameters are to comprise an identity matrix.

14. A method according to any of claims 11 to 13, wherein the input data comprises medical image data.

15. A computer program product comprising a non-transitory computer-readable medium, the computer-readable medium having computer-readable code (904) embodied therein, the computer-readable code being configured such that, on execution by a suitable computer or processor (902), the computer or processor is caused to perform the method of any of claims 10 to 14.

Fig. 1

200

L1  L2  U1  L3  L4  U2  L5  L6  U3  L7  L8

Fig. 2

Fig. 3

EP 3 624 022 A1

Fig. 4

Fig. 5

Fig. 6

$O_i = K_i * I_i + b_i$

EP 3 624 022 A1

700

```
┌─────────────────┐
│       702       │
└─────────────────┘
         │
         ▼
┌─────────────────┐
│       704       │
└─────────────────┘
```

Fig. 7

800

```
┌─────────────────┐
│       802       │
└─────────────────┘
         │
         ▼
┌─────────────────┐
│       804       │
└─────────────────┘
         │
         ▼
┌─────────────────┐
│       806       │
└─────────────────┘
         │
         ▼
┌─────────────────┐
│       808       │
└─────────────────┘
         │
         ▼
┌─────────────────┐
│       810       │
└─────────────────┘
```

Fig. 8

Fig. 9

Europäisches
Patentamt

European
Patent Office

Office européen
des brevets

# EUROPEAN SEARCH REPORT

Application Number

EP 18 29 0098

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Nicolas Gonthier ET AL: "Introduction to Transfer Learning", <br> , <br> 5 July 2018 (2018-07-05), XP055563020, <br> Retrieved from the Internet: <br> URL:https://perso.telecom-paristech.fr/gon thier/pdf/DLWG/introduction-transfer-learn ing.pdf <br> [retrieved on 2019-02-28] <br> * page 1 - page 8 * <br> * page 14 - page 15 * <br> * page 24 - page 32 * <br> ----- | 1-15 | INV. <br> G06N3/08 <br> G06N3/04 <br> G06T7/00 |
| A | Hadrien Bertrand: "Deep Learning and transfert learning in medical imaging", <br> , <br> 8 March 2018 (2018-03-08), XP055563023, <br> Retrieved from the Internet: <br> URL:https://perso.telecom-paristech.fr/gon thier/pdf/DLWG/18_03_08_telecom_Hadiren_Be rtrand.pdf <br> [retrieved on 2019-02-28] <br> * the whole document * <br> ----- | 1-15 | |
| A | Max Jaderberg ET AL: "Spatial Transformer Networks", <br> , <br> 4 February 2016 (2016-02-04), XP055549686, <br> Retrieved from the Internet: <br> URL:https://arxiv.org/pdf/1506.02025.pdf <br> [retrieved on 2019-01-30] <br> * abstract * <br> * page 1, line 1 - page 6, last line * <br> ----- | 1-15 | |

TECHNICAL FIELDS
SEARCHED (IPC)

G06N
G06T

-/--

The present search report has been drawn up for all claims

| Place of search | Date of completion of the search | Examiner |
|---|---|---|
| The Hague | 28 February 2019 | Totir, Felix |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 1 of 2

Europäisches
Patentamt

European
Patent Office

Office européen
des brevets

## EUROPEAN SEARCH REPORT

Application Number

EP 18 29 0098

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Olaf Ronneberger ET AL: "U-Net: Convolutional Networks for Biomedical Image Segmentation" In: "Serious Games", 1 January 2015 (2015-01-01), Springer International Publishing, Cham 032682, XP055561106, ISSN: 0302-9743 ISBN: 978-3-642-37803-4 vol. 9351, pages 234-241, DOI: 10.1007/978-3-319-24574-4_28, * abstract; figure 1 * * page 234, line 1 - page 237, last line * | 1-15 | |
| A | US 10 032 089 B2 (DEEPMIND TECH LIMITED [GB]) 24 July 2018 (2018-07-24) * abstract; figures 1-3 * * column 1, line 5 - column 6, last line * | 1-15 | |
| A | CN 107 657 602 A (UNIV WUHAN SCIENCE & TECH) 2 February 2018 (2018-02-02) * abstract; figures 1-5 * * paragraph [0001] - paragraph [0024] * * paragraph [0032] - paragraph [0050] * | 1-15 | TECHNICAL FIELDS SEARCHED (IPC) |
| A | CN 107 945 168 A (SHANGHAI UNITED IMAGING HEALTHCARE CO LTD) 20 April 2018 (2018-04-20) * abstract; figures 1-2 * * paragraph [0001] - paragraph [0035] * * paragraph [0048] - paragraph [0120] * | 1-15 | |

The present search report has been drawn up for all claims

| Place of search | Date of completion of the search | Examiner |
|---|---|---|
| The Hague | 28 February 2019 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 29 0098

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2019

| Patent document cited in search report | | Publication date | Patent family member(s) | Publication date |
|---|---|---|---|---|
| US 10032089 | B2 | 24-07-2018 | CN 108027885 A | 11-05-2018 |
| | | | EP 3262569 A1 | 03-01-2018 |
| | | | JP 2018514856 A | 07-06-2018 |
| | | | KR 20170136588 A | 11-12-2017 |
| | | | US 2016358038 A1 | 08-12-2016 |
| | | | US 2018330185 A1 | 15-11-2018 |
| | | | WO 2016197046 A1 | 08-12-2016 |
| CN 107657602 | A | 02-02-2018 | NONE | |
| CN 107945168 | A | 20-04-2018 | NONE | |

EPO FORM P0459

For more details about this annex : see Official Journal of the European Patent Office, No. 12/82